# EUROPEAN PATENT APPLICATION

(11) **EP 3 015 610 A1**
(43) Date of publication of application: **04.05.2016**
(21) Application number: 15177730.7
(22) Date of filing: 21.07.2015
(51) Int. Cl.: E03C 1/04, F16K 11/00

(54) **SHOWER-COLUMN TYPE CONSTANT TEMPERATURE FILTER FAUCET**

(30) Priority: 30.10.2014 CN 201420637423 U
(71) Applicant: Xiamen Runner Industrial Corporation, Xiamen 361021 (CN)
(72) Inventor: Wang, Qing-Ping, 361021 Xiamen (CN); Wu, Can-Kun, 361021 Xiamen (CN)
(74) Representative: Lang, Christian

(57) **Abstract**

A shower-column type constant temperature filter faucet includes: an outer shell, in a form of a rectangular box; a faucet main body, provided with a hot water input tube and cold water input tube, and having a water passage channel in its central portion; a constant temperature valve core seat, disposed at the right end of the faucet main body, and is provided with a constant temperature valve core; a filter core, disposed at the left end of the faucet main body; a switching valve core seat, disposed in front of the left end of the faucet main body, and is provided with a switching valve core. Wherein, a water input port of the filter core is connected to a water output port of the constant temperature valve core through the water passage channel in a central portion of the faucet main body.

## Description

### BACKGROUND OF THE INVENTION

### Field of the Invention

The present invention relates to a constant temperature faucet, and in particular to a shower-column type constant temperature filter faucet.

### THE PRIOR ARTS

In the present technology, the shower-column type constant temperature faucet is not designed to provide filtering function, also, in general, it is quite voluminous and occupying a large space.

Therefore, presently, the design and performance of shower-column type constant temperature faucet is not quite satisfactory, and it leaves much room for improvement.

### SUMMARY OF THE INVENTION

In view of the problems and drawbacks of the prior art, the present invention provides a shower-column type constant temperature filter faucet, to overcome the shortcomings of the prior art.

A major objective of the present invention is to provide a shower-column type constant temperature filter faucet, comprising: an outer shell, in a form of a shallow rectangular box; a faucet main body, disposed in the outer shell, and is provided with a hot water input tube and a cold water input tube, and is also provided with a water passage channel in its central portion; a constant temperature valve core seat, disposed at the right end of the faucet main body, is provided with a constant temperature valve core, and is connected to the hot water input tube and the cold water input tube; a filter core, disposed at the left end of the faucet main body; and a switching valve core seat, disposed in front of the left end of the faucet main body, and is provided with a switching valve core. Wherein, a water input port of the filter core is connected to a water output port of the constant temperature valve core through the water passage channel in a central portion of the faucet main body. While the filter core, the water passage channel, and the constant temperature valve core are aligned in a line. On the faucet main body is provided with the switching valve core seat for receiving the switching valve core. And on the switching valve core seat is provided with a top sprayer water output port connected to top sprayer, a shower water output port connected to a shower faucet, and a lower water output port connected to a bath tub faucet.

Further, in the switching valve core seat is provided with three functional water output ports corresponding and connected in communication with the top sprayer water output port, the shower water output port, and lower water output port. In a central portion on the upper side of the outer shell is provided with a thread connector connected to the shower column. The top sprayer water output port of the switching valve core seat is fixed and connected to a water channel connecting piece. The water channel connecting piece is connected to the thread connector through a pliable tube.

Further, on the faucet main body is provided with a constant temperature valve core seat for receiving a constant temperature valve core. On the constant temperature valve core seat is provided with a cold water input hole, a hot water input hole, and a mixed water output hole corresponding to and hermetically sealed with the cold water input hole and hot water input hole, and water output hole on the constant temperature valve core.

Further, on the left side wall of the outer shell is provided with a filter core rotation button for fixing the filter core. On the front of the outer shell is provided with a switching handle for controlling the switching valve core. On the right side of the outer shell is provided with a temperature control handle for controlling the constant temperature valve core.

Compared with the existing technology, the present invention has the following advantages: the shower-column type constant temperature filter faucet is new in structure, optimal in design, low in production cost. It is not only designed with filter function, but it can also be used to place bathing objects on it, so that when it is put on a wall, it can give a compact appearance, to achieve various functions.

Further scope of the applicability of the present invention will become apparent from the detailed descriptions given hereinafter. However, it should be understood that the detailed descriptions and specific examples, while indicating preferred embodiments of the present invention, are given by way of illustration only, since various changes and modifications within the spirit and scope of the present invention will become apparent to those skilled in the art from this detailed descriptions.

### BRIEF DESCRIPTION OF THE DRAWINGS

The related drawings in connection with the detailed descriptions of the present invention to be made later are described briefly as follows, in which:
Fig. 1 is an exploded view of a shower-column type constant temperature filter faucet according to an embodiment of the present invention;
Fig. 2 is a cross section view of a shower-column type constant temperature filter faucet according to an embodiment of the present invention;
Fig. 3 is a cross section view along A-A line of Fig. 2;
Fig. 4 is a schematic diagram of a water channel connection piece according to an embodiment of the present invention;
Fig. 5 is a front perspective view of a switching valve core seat according to an embodiment of the present invention;
Fig. 6 is a rear perspective view of a switching valve core seat according to an embodiment of the present invention;
Fig. 7 is a perspective view of a constant temperature valve core according to an embodiment of the present invention; and
Fig. 8 is a perspective view of a constant temperature valve core seat according to an embodiment of the present invention.

### DETAILED DESCRIPTION OF THE PREFERRED EMBODIMENT

The purpose, construction, features, functions and advantages of the present invention can be appreciated and understood more thoroughly through the following detailed description with reference to the attached drawings.

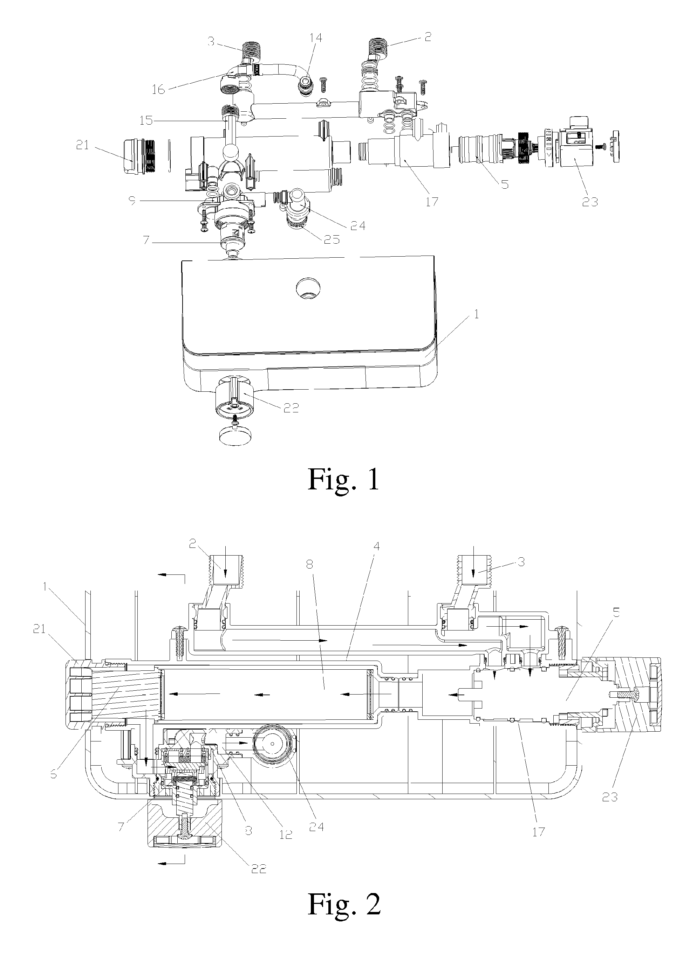

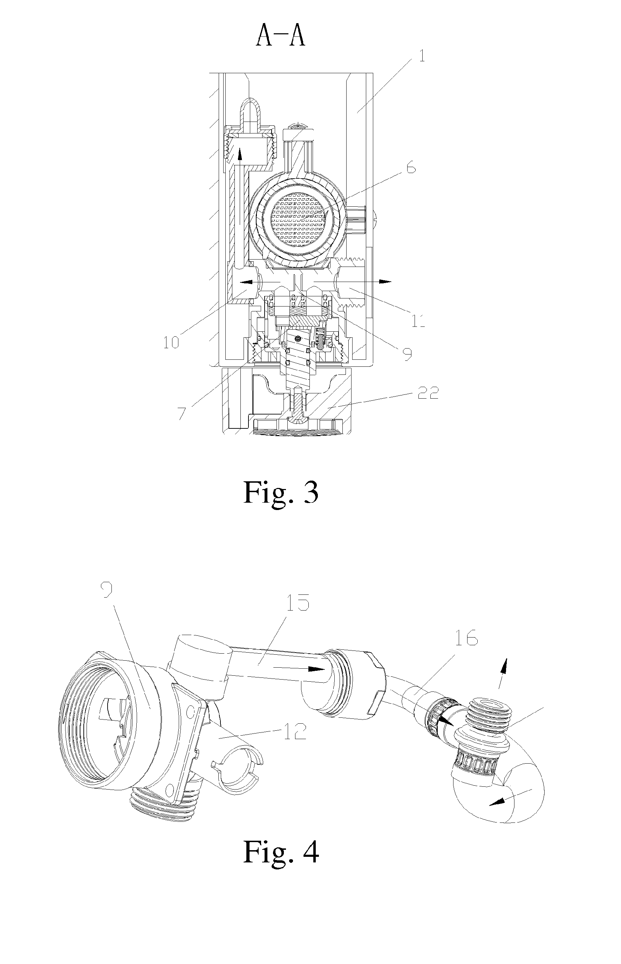

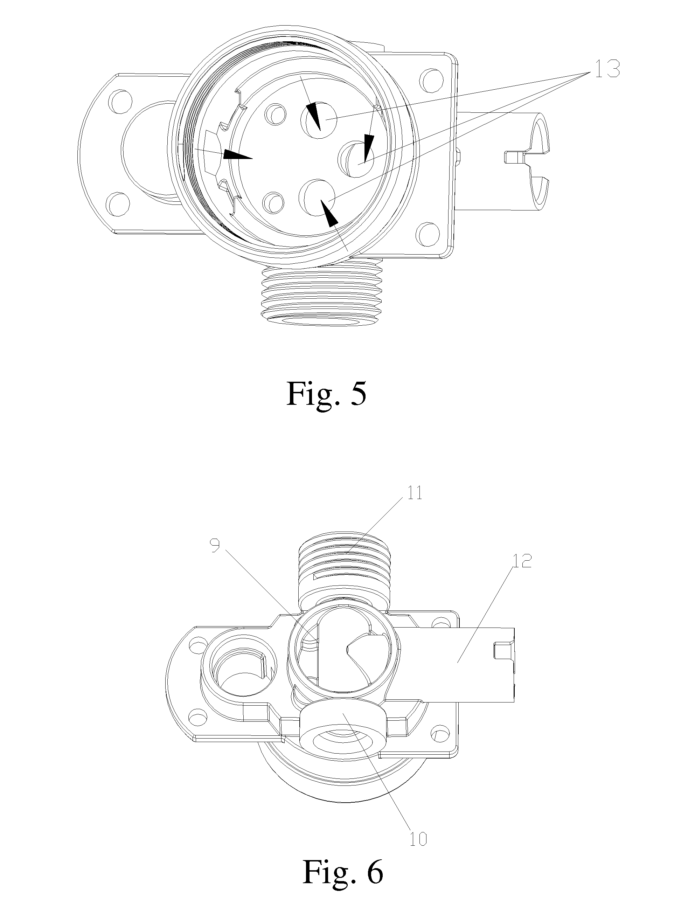

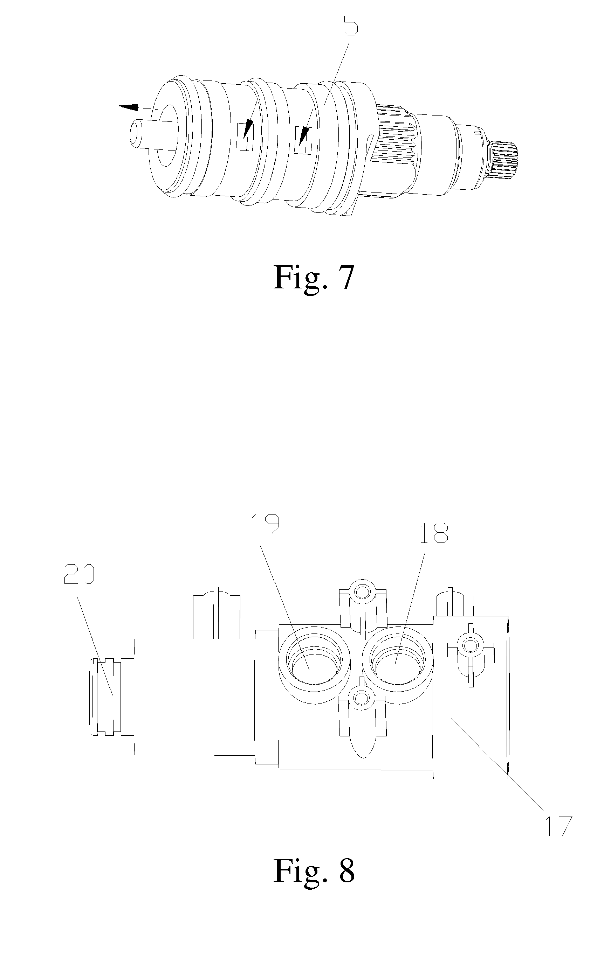

Refer to Figs. 1 to 8 respectively for an exploded view of a shower-column type constant temperature filter faucet according to an embodiment of the present invention; a cross section view of a shower-column type constant temperature filter faucet according to an embodiment of the present invention; a cross section view along A-A line of Fig. 2; a schematic diagram of a water channel connection piece according to an embodiment of the present invention; a front perspective view of a switching valve core seat according to an embodiment of the present invention; a rear perspective view of a switching valve core seat according to an embodiment of the present invention; a perspective view of a constant temperature valve core according to an embodiment of the present invention; and a perspective view of a constant temperature valve core seat according to an embodiment of the present invention.

As shown in Figs. 1 to 8, the present invention provides a shower-column type constant temperature filter faucet, including an outer shell 1, a faucet main body 4, a constant temperature valve core seat 17; a filter core 6, a switching valve core seat 9. Wherein, the outer shell 1 is of a rectangular box shape, and on its top is provided with a cover plate, the upper side of the cover plate is of a plane surface, such that objects (such as, soap, bathing lotion etc.) can be placed thereon. The faucet main body 4 is placed in the outer shell 1, and is provided with a cold water input tube 2, and a hot water input tube 3. The constant temperature valve core seat 17 is disposed at the right end of the faucet main body 4, and is provided with a constant temperature valve core 5 connected to the cold water input tube 2 and the hot water input tube 3. A filter core 6 is disposed at the left end of the faucet main body 4, so that after cold water and hot water passing through the constant temperature valve core 5 to regulate their temperatures, they enter into the filter core 6 to filter out the impurities. The switching valve core seat 9 is disposed in front of the left end of the faucet main body 4 , and is provided with a switching valve core 7. A water input port of the filter core 6 is connected to a water output port of the constant temperature valve core 5 through the water passage channel 8 in the central portion of the faucet main body 4. In order to optimize design, the filter core 6, the water passage channel 8, and the constant temperature valve core 5 are designed to align to the same axial line. On the faucet main body 4 is provided with the switching valve core seat 9 for receiving the switching valve core 7. On the switching valve core seat 9 is provided with a top sprayer water output port 10 connected to top sprayer, a shower water output port 11 connected to a shower faucet, and a lower water output port 12 connected to a bath tub faucet. As such, the purified water coming out from the filter core 6 enters into the switching valve core 7, such that a user may select and change the ways of water output (shower, top sprayer, or bath tub) based on his own choice. The lower water output port 12 is connected to a water output connector 24, on which is disposed a water softening device 25.

In the present embodiment, in the switching valve core seat 9 is provided with three functional water output ports 13 corresponding and connected in communication with the top sprayer water output port 10, the shower water output port 11, and lower water output port 12. In a central portion on the upper side of the outer shell 1 is provided with a thread connector 14 connected to the shower column. The top sprayer water output port of the switching valve core seat 9 is fixed and connected a water channel connecting piece 15 in communication. The water channel connecting piece 15 is connected to the thread connector 14 through a pliable tube 16. The water channel connecting piece 15 and the top sprayer water output port are welded together through a hot plate, to take the shower column out from the central portion of the outer shell 1, to achieve aesthetical beauty.

In the present embodiment, on the faucet main body 4 is provided with a constant temperature valve core seat 17 for receiving a constant temperature valve core 5. On the constant temperature valve core seat 17 is provided with a cold water input hole 18 and hot water input hole 19, and a mixed water output hole 20 corresponding to and hermetically sealed with the cold water input hole and hot water input hole, and water output hole on the constant temperature valve core 5.

In the present embodiment, the input water connector, the cold water input tube, the hot water input tube, and the nuts pressing the two valve cores are made of copper. In addition, the switching valve core seat 9, thread connector 14, and water channel connecting piece 15 are made of PPS+40%GF. The filter core fixing seat and the water output connector are made of PP0+40%GF, while other components are made of ABS, in achieving saving of material cost.

In the present embodiment, on the left side wall of the outer shell 1 is provided with a filter core rotation button 21 for fixing the filter core 6. On the front of the outer shell 1 is provided with a switching handle 22 for controlling the switching valve core 7. On the right side of the outer shell 1 is provided with a temperature control handle 23 for controlling the constant temperature valve core 5. Decoration covers are provided on the switching handle 22 and temperature control handle 23; while on the temperature control handle 23 is provided with blue and red markings.

The above detailed description of the preferred embodiment is intended to describe more clearly the characteristics and spirit of the present invention. However, the preferred embodiments disclosed above are not intended to be any restrictions to the scope of the present invention. Conversely, its purpose is to include the various changes and equivalent arrangements which are within the scope of the appended claims.

## Claims

1. A shower-column type constant temperature filter faucet, comprising:
an outer shell, in a form of a rectangular box;
a faucet main body, disposed in the outer shell, and is provided with a hot water input tube and a cold water input tube, and is also provided with a water passage channel in its central portion;
a constant temperature valve core seat, disposed at the right end of the faucet main body, and is provided with a constant temperature valve core, and is connected to the hot water input tube and the cold water input tube;
a filter core, disposed at the left end of the faucet main body; and
a switching valve core seat, disposed in front of the left end of the faucet main body, and is provided with a switching valve core,
wherein, a water input port of the filter core is connected to a water output port of the constant temperature valve core through the water passage channel in a central portion of the faucet main body, while the filter core, the water passage channel, and the constant temperature valve core are aligned to a same axial line, on the faucet main body is provided with the switching valve core seat for receiving the switching valve core, and on the switching valve core seat is provided with a top sprayer water output port connected to a top sprayer, a shower water output port connected to a shower faucet, and a lower water output port connected to a bath tub faucet.

2. The shower-column type constant temperature filter faucet as claimed in claim 1, wherein in the switching valve core seat is provided with three functional water output ports corresponding and connected in communication with the top sprayer water output port, the shower water output port, and lower water output port, in a central portion on an upper side of the outer shell is provided with a thread connector connected to the shower column, the top sprayer water output port of the switching valve core seat is fixed and connected to a water channel connecting piece in communication, the water channel connecting piece is connected to the thread connector through a pliable tube.

3. The shower-column type constant temperature filter faucet as claimed in claim 1, wherein on the faucet main body is provided with the constant temperature valve core seat for receiving the constant temperature valve core, on the constant temperature valve core seat is provided with a cold water input hole, hot water input hole, and a mixed water output hole corresponding to and hermetically sealed with the cold water input hole, hot water input hole, and water output hole on the constant temperature valve core.

4. The shower-column type constant temperature filter faucet as claimed in claim 1, wherein on the left side wall of the outer shell is provided with a filter core rotation button for fixing the filter core, on the front of the outer shell is provided with a switching handle for controlling the switching valve core, and on the right side of the outer shell is provided with a temperature control handle for controlling the constant temperature valve core.
